# EUROPEAN PATENT APPLICATION

(11) **EP 4 790 293 A1**
(43) Date of publication of application: **12.08.2026**
(21) Application number: 26157541.9
(22) Date of filing: 10.02.2026
(51) Int. Cl.: F16L 5/04, F16L 57/04, F16L 59/14

(54) **AN ASSEMBLY OF PARTS-INCLUDING A RUBBER FOAM STRUCTURE-FOR AT LEAST TEMPORARILY PROTECTING AN ALUMINIUM PIPE OR CONTAINER-LIKE DEVICE AGAINST POTENTIAL EXPOSURE TO THE MELTING TEMPERATURE OF THE ALUMINIUM**

(30) Priority: 10.02.2025 NL 2039756; 05.08.2025 NL 2040973
(71) Applicant: Beele Engineering B.V., 7122 NZ Aalten (NL)
(72) Inventor: Beele, Johannes Alfred, 7122 NZ Aalten (NL)
(74) Representative: van Bouwelen, Franciscus Maria

(57) **Abstract**

An assembly (1) of parts for at least temporarily protecting an aluminium container-like device against reaching a melting temperature of the aluminium device, wherein in an assembled condition the assembly forms at least a cover (7) for at least partly embracing the container-like device, and wherein the assembly comprises at least one outer part (8) of the cover (7) and at least one inner part (9) of the cover (7), wherein the inner part (9) comprises at least predominantly an endothermic rubber which is configured for at least partly embracing the container-like device, wherein the endothermic rubber has a foam structure, wherein the outer part (8) comprises a protective shell which is shaped to overlay the at least one inner part (9), and wherein the outer part (8) at least predominantly comprises expanded vermiculite, wherein the outer part (8) is configured for providing a stably shaped cavity into which at least in the assembled (1) condition the inner part (9) is at least partly held, so that the inner part (9) is in an assembled condition shielded off from a high external temperature.

## Description

### Field of the disclosure

The present disclosure relates to an assembly of parts for at least temporarily protecting a container-like device which is predominantly made of aluminium. The protection aimed for is against potential exposure to a temperature which is higher than the melting temperature of the aluminium. The disclosure also relates to a method for making an assembly of parts for at least temporarily protecting an aluminium pipe or container-like device against potential exposure to a temperature higher than the melting temperature of the aluminium.

### Background of the disclosure

Protecting a pipe or a container-like device against melting is particularly relevant for the use of aluminium pipes which extend from one compartment to another through a wall that is between these compartments. Such an extension through a wall or ceiling is often referred to as a so-called pipe penetration, which is widely known in the construction world. Such a penetration usually comprises an opening in a wall through which the pipe extends. The annular space in the opening that is not occupied by the pipe is typically sealed off by a fire-resistant sealing system. Such systems are tested for the use with a particular pipe, a particular wall and particular circumstances, such as the use or absence of thermal insulation around the pipe and/or the wall around the pipe penetration.

These days aluminium pipes are often used given its many advantages, one being its low density allowing for light constructions. A disadvantage is its relatively low melting point. In case of a nearby fire there is a risk that aluminium starts melting away. If the pipe starts melting away up to the position of the pipe penetration through a wall, there is a serious risk that the fire will propagate from one compartment to another through the opening that will then develop in the wall. Aluminium pipes are these days more often than in the past used, especially in shipbuilding, where it is even more critical that a fire is for as long as possible contained in a relatively small part of the ship and does not rapidly propagate throughout the vessel. Often an assembly is installed as a fire-resistant sealing system which needs to keep a fire on one side of the wall under prescribed test circumstances for a certain period of time at that side. When no flames breakthrough the pipe penetration it is said that the fire integrity is maintained. The time during which this resistance to spreading of the fire through the pipe penetration lasts is witnessed and gives rise to fire ratings and the issuance of certificates, which allow designers to prescribe which sealing systems need to be applied in constructions. Although pipes traditionally penetrate walls in vessels and off-shore constructions, aluminium pipes are used in many parts of industry, and so are other container-like devices of aluminium.

Compared to shipbuilding, a relatively novel use of aluminium pipes and container-like devices is in the field of High Voltage Substations which are all over the world present for the supply of electricity to for instance industrial sites, railway networks and urban areas where many households are based. Fire safety is also for these uses of relevant. Traditionally, these substations may be outdoors, and have atmospheric air as a dielectric gas medium between the components which are for that reason widely separated from each other. Such substations are referred to as Air Insulated Substations (AIS). These substations have disadvantages, as a result of this type of "electrical insulation" between the components. The clearance needed between the components over which a voltage difference is to be maintained is relatively large, typically per kV one centimetre, so that for 380 kV a distance of about 4 meters will need to be applied. Consequently, the substation requires a large footprint. In urban areas, where land is scarce and expensive, this adds to the pricing of the availability of electricity. At the same time, society has become more and more dependent on the availability of affordable electricity. Unfortunately, pollution, salt and moisture in the air can negatively affect the dielectric properties of air, so that extra safety margins need to be applied. As an AIS is typically outdoors, there is also no protection from other environmental extremes, such as extreme colds or an extreme heat. Naturally AIS's are poorly shielded, if at all, from potential strikes of lightning.

These problems were successfully addressed by the use of a different dielectric medium. A gas that is for the required function relative to air a superior gas, has a much higher dielectric strength and offers much better insulation properties. Ideally, the volumetric specific heat is higher, so that the effect of heating within electrical equipment is not accompanied by a steep rise in temperature.

Such Subsystems or Switch systems that have a gas other than air as a dielectric are referred to as Gas Insulated Subsystems (GIS). Due to the need to ensure that the gas is not flowing or diffusing away, the GIS is placed in a container-like device that keeps the gas contained therein. Such a device may be pipe-shaped, or simply a pipe that is connected to another pipe and/or another container-like device to ensure that the gas is in use retained as a dielectric for the relevant parts of the GIS.

The GIS typically comprises HV components such as disconnectors, CBs, busbars, voltage and current transducers. Due to the use of a dielectric medium that has a much higher dielectric strength, GIS can save up to 90% of space compared with Air Insulated Substation (AIS). In this disclosure reference is also made to Gas Insulated Busbars (GIB) and Gas Insulated Lines (GIL). For the purpose of this disclosure, the suitability for GIS equally signals the suitability for GIB and the suitability for GIL, and *vice versa.* In the following GIS is often referred to but this should be taken as signal that the comments also apply to GIB and to GIL.

A GIS, GIB and GIL are particularly suitable for indoor and reduces the space needed when placed together with the dielectric gas contained in a pipe or container-like device. The system is then also applicable for outdoor substations. It offers protection to the atmospheric elements. This has opened up the possibility to have GIS, GIB and GIL at many more locations, also where suitable space is hardly available and thus expensive. It has also allowed for the combination of AIS's with GIS's where expansion on the basis of use of AIS's only would not have been possible. The incorporation of GIS into the electrical infrastructure of an industrial facility allows for onsite stepping down of voltage, so that High Voltage stations can be placed together with distribution stations of lower voltage electricity supply.

As made clear above, the electrical components that need to be surrounded by a suitable gas with a high dielectric strength, need to be captivated in a container-like device, so that gas will not be free to flow or diffuse away. Typically, the GIS, the GIB or the GIL is held in a metal pipe, which forms in essence a Faraday cage so that it there is no noticeable influence on the active performance of the components by electromagnetic phenomena outside the pipe.

For a long period of time, steel pipes were used. However, steel pipes are heavy, therewith adding to costs and causing difficulties with implementing in existing constructions. These days aluminium (alloy) pipes, which are by their low density relatively light, are often used for holding therein a Gas Insulated Substation (GIS). Given that today 75% percent of the aluminium ever created is still in use, this material is also attractive from a sustainability point of view. Hence, an Aluminium pipe for holding therein a GIS is a very interesting option.

The main conductor in a GIS may typically be of aluminium or of cupper. For reasons of which a description is beyond the scope of this disclosure, aluminium seems to become more favourable compared to copper.

For the purpose of this disclosure it is important to note that aluminium has a melting temperature of about 660°C whereas f.i. copper has a melting temperature of 1085°C. It is thus paramount to consider how to protect an GIS hosted in a pipe of aluminium against the outbreak of a fire. Clearly, aluminium will start melting away at a much lower temperature than the temperature at which copper starts melting.

The penetration of the aluminium pipe through an opening in a dividing wall in a construction is typically implemented with the use of a fire-resistant or fire-retardant sealing system in the annular space that is in the opening and that surrounds the pipe. The so-called pipe-penetration as provided with such a sealing system also has to meet requirements with regards to withstanding exposure to a (nearby) fire.

When the aluminium pipe melts away in the penetration, it will leave a large hole in the dividing wall through which hot gasses such as smoke can spread and through which potentially also a nearby fire can rapidly spread. An important criterium is therefore the fire integrity. This is typically tested by exposing a pipe penetration with the sealing system installed in a dividing wall to a fire, occurring at one side of the wall. When for a predetermined period of time due to the performance of the sealing system no flaming occurs at the unexposed side, it is said that the fire integrity is maintained.

Attempts to prevent the pipe from reaching the melting point of the pipe has previously been carried out by wrapping the pipe up with mineral wool from the sealed pipe-penetration in a direction away from the penetration, over a relatively long length of the pipe. As it is usually not known from which direction a fire approaches a penetration, such wrapping up should be done at each side of the dividing wall. Not only is the wrapping of mineral wool a cumbersome activity for which precautions need to be taken by the workers to not inhale fibres etc., the amount of mineral wool in terms of the thickness of the layer(s) needed, in terms of the length of the pipe measured from the penetration over which the mineral wool needs to be applied, are simply too much. Another point of concern is the influence the mineral wool has on the stability of the temperature in the GIS, the GIB and the GIL. Furthermore, the mineral wool cannot straightforwardly be applied outside and be exposed to rainy and windy weather.

US2015/0079350 comprises a composition sheet which is a laminate having at least one of linear grooves continuously formed and linear grooves intermittently formed, and two or more of the respective linear grooves being formed onto at least surface of the composition sheet with an interval and one or more substrate layers. The composition sheet can be wound around a pipe by bending the sheet through use of the grooves.

It is an object of the disclosure to provide an assembly which would address at least one of the problems described above.

### Summary of the disclosure

Provided as an embodiment of a first aspect of this disclosure is an assembly of parts for at least temporarily protecting at least a part of an aluminium container-like device against reaching a melting temperature of the aluminium device. In an assembled condition the assembly forms at least a cover for at least partly embracing the container-like device. The assembly comprises at least one outer part of the cover and at least one inner part of the cover. The inner part comprises at least predominantly an endothermic rubber which is configured for at least partly embracing the container-like device. The endo thermic rubber has a foam structure. The outer part comprises a protective shell which is shaped to overlay the at least one inner part. The outer part at least predominantly comprises expanded vermiculite or an equivalent thereof and is optionally provided with a coating. The outer part is further preferably configured for providing a stably shaped cavity into which at least in the assembled condition the inner part is at least partly held, so that the inner part is in the assembled condition shielded off from a high external temperature.

Expanded vermiculite is generally cited to have a thermal conductivity in a range of 0.04-014 W/m.K. Hence, the outer part comprising predominantly expanded vermiculite, and preferably is made of expanded vermiculite grains which are held together by a binder agent, which also has a low thermal conductivity. The specific heat is generally cited to be 0.92 kJ/Kg/K. The bulk density is generally cited to be 80-120 Kg/m3. Accordingly, the outer part is difficult to heat up and is an extremely poor conductor of heat, and is, in other words, a very good heat insulator. Hence, no matter from which side heat is available, the outer part is very reluctant to take it up and is very unwilling to allow heat to be transferred. Consequently, a cover comprising an outer part that is predominantly made of expanded vermiculite or an equivalent thereof, protects the container-like device against a high external temperature.

Endothermic rubber is a material which is engineered to undergo at least one endothermic reaction upon exposure to heat. An endothermic reaction requires heat input, and when the temperature is such that the reaction could from a thermodynamic perspective take place, the endothermic rubber takes in heat for further facilitating the endothermic reaction. As such, an endothermic rubber removes heat out of its surrounding. The inner part being predominantly made of an endothermic rubber can therefore act as a heat sink. The endothermic rubber having a foam structure allows for establishing optimally thermal contact with the container-like device, independent of any variability and/or production tolerances in the dimensions of the container-like device and in the dimensions of the inner part. This ensures that good use can be made of the endothermic properties of the rubber.

Preferably, the inner part is made of an endothermic rubber. Even more preferably, the inner part is in its entirety an endothermic rubber.

Advantageously, when the inner part of endothermic rubber embraces a part and preferably fully surrounds the aluminium container-like device and when the container-like device of aluminium is exposed to a high temperature, that heat is sucked up by the endothermic rubber as soon as it reaches a temperature at which the rubber material undergoes an endothermic reaction. This embodiment of this aspect of the disclosure aims to solve the problem of how to maintain in the presence of a nearby source of much heat, such as a fire, a high capacity for taking up heat from the container-like device.

As the endothermic rubber is protected by the outer part of the cover against heat that is available at the external side of the cover, much of the capacity of the inner part for taking up heat, if not all the inner part's capacity for taking up heat, is available for taking up heat from the container-like device that is embraced by the cover.

This is particularly advantageous when the assembly in the assembled condition forms a sleeve for embracing the circumference of a pipe-shaped container-like device, and especially useful when the container-like device is made of aluminium or an alloy thereof for captivating therein a Gas Insulated Subsystem or a Gas Insulated Busbar.

During a catastrophe such as a nearby fire, the aluminium pipe, having a specific heat of about 0.0009 KJ/Kg.K, is easily heated up. Aluminium, having a thermal conductivity of 237 W/ m.K rapidly transfers the heat along the axial direction of the pipe following a temperature gradient. When the a nearby fire takes place, the aluminium heats up. Without wishing to be bound by a theory, it is thought that due to the presence of the endothermic inner part as placed against the aluminium pipe over a length of the pipe up to the pipe-penetration, the inner part is also heated up. At an elevated temperature , the inner part is triggered to undergo an endothermic reaction. The heat is then from the aluminium taken up by the inner part for enabling the endothermic reaction. As a result of that, heat is diverted from being transferred via the aluminium towards the pipe penetration. A significant part of the heat then enters the endothermic inner part and can not be used for further warming up the aluminium pipe. This protects the pipe-penetration and the sealing used therein. This results in a relatively long period of time during which the pipe penetration can withstand exposure to a nearby fire. In any case, this period is longer as compared to a situation in which no inner part and no outer part surrounds the pipe.

To ensure that the inner part is fully available for its function of extracting heat out of the aluminium, the outer part, which is the shell that is made of expanded vermiculite or an equivalent thereof, blocks off a transfer of heat from the surrounding radially inwards to the inner part. Hence, the inner part can be optimally exclusively utilized for its role as heat sink for heat that travels along the aluminium pipe.

It has accordingly been possible to provide the assembly of parts for at least temporarily protecting a container-like device that is predominantly made of aluminium, against exposure to a temperature which is higher than the melting temperature of the aluminium or the aluminium alloy.

In an embodiment, the inner part and the outer part are bonded to each other. This facilitates an easy application, in one step, for applying the cover around the container-like device. The use of covers of which the inner part and the outer part are bonded to each other, also addresses a problem that is sometimes found in the field of thermal shielding systems of multiple components. Particularly, when after installation of the shielding systems the inner part no longer can be seen, there is the possibility that for the sake of saving costs an inferior and cheaper inner part is used. Such an inferior inner part may not sufficiently have endothermic properties and may therefore not suck up heat from the aluminium pipe. Such an inner part can therefore not be effective as a heat sink. As a consequence, the aluminium pipe may be heated up to a point that it starts melting, also close to the penetration. This most likely will lead to a large hole in the penetration through which the fire can spread into a next compartment. By providing the outer part and the inner part as bonded together, and preferably in dimensions that allow for matching the outer surface of the container-like device, use of a less suitable inferior inner part is no longer a viable option as it would require the removal of the more optimal inner part before the less suitable inferior inner part is used. When the inner part and the outer part are optimally dimensioned in relation to the thermal properties of both parts, the performance of the cover will be as expected. In short, it is more likely that a product of a cover having the inner part and the outer part bonded to each other is in accordance with the required and tested safety standards and delivers as expected.

In an embodiment, the inner and/or the outer parts comprise segmental parts of the circumference of the cover. It is then possible to apply the parts over a large container-like device, such as a large diameter pipe-shaped container-like device. The cover can be built up out of the segmental parts, by placing them adjacent each other so that the container-like device is embraced and preferably fully surrounded by the cover. This embodiment, allows particularly well for placement of the assembly over container-like devices which are already fixedly been taken up in a construction.

Preferably, the inner and/or outer part comprise each longitudinal parts of the cover. This allows for embracing a lengthy container-like device, by placing multiple longitudinal parts adjacent each other along a length direction of the container-like device.

In the assembled condition of an embodiment, one single outer part forms a sleeve or at least two outer parts together form a sleeve, wherein the single outer part provides a circumference of the sleeve, and each of the at least two outer parts provide at most a part of a circumference of the sleeve.

In particular, the embodiment wherein at least two outer parts together form a sleeve, allows for placement of the assembly over such pipe-like devices which are already fixedly taken up in a construction, and around which not easily in one single application step a single part sleeve can be placed. A single outer part providing by itself a sleeve can be used in situations wherein a pipe-shaped container-like device still needs to be placed, and connected up with other pipe-shaped elements, so that the sleeve can be put around the pipe-shaped part before fixedly placing and connecting the pipe-shaped part.

In an embodiment, the endothermic rubber is a silicone-based rubber. Silicone based rubbers are known to be heat-resistant rubbers, due to the high Si-O bond strength. The initial decomposition temperature of silicone rubber is reported to start only at 340 °C, whilst the main chain rupture is reported to occur between 460°C and 524°C. These degradation processes require energy input. Ideally, the endothermic rubber is designed to undergo other endothermic reactions at a lower temperature range. The thermal energy is preferably already be taken up by those endothermic reactions of the inner part, before any degradation takes place. Other processes may occur before any major degradation of the silicone rubbers itself takes place. Advantageously, such other processes occur thus at a temperature which is below the melting point of aluminium at 660 °C. The endothermic reactions which may occur ideally result in maintaining the dimensional stability of the inner part, as explained below.

As explained above, it is thought that the occurrence of endothermic processes provides a "heat sink" effect. This solves the problem of how to reduce the probability of melting of the aluminium container-like device.

In an embodiment, the rubber comprises at least predominantly closed cells containing a gas. During the production of a rubber foam structure, which is well-known in the art, the foaming agent is usually such that the resulting gas in the closed cells is at least predominantly nitrogen gas. Silicone foam is known to have a thermal conductivity of about 0.1 W/m.K and it takes 0.7 KJ to let the temperature of one Kg of silicone foam to increase by one degree (c = 0.7 KJ/Kg.K). Clearly, once silicone rubber foam starts taking up heat, it does not increase its temperature that rapidly even though it takes up a lot of heat. It will not rapidly transfer the heat throughout the foam structure either. Although the nitrogen gas in the closed cells may on heating raise the pressure in the respective cells, the foam cannot expand due to the outer part which has a stable shape and dimension and embraces the inner part of foam. The outer part is also thermally very stable, and does not take up much heat, if any. The inner part does not have to take up heat from the outer part. Hence the inner part can absorb much heat. That heat cannot rapidly be passed on within the foam.

The endothermic rubber, preferably a silicone rubber, is typically a flame-retardant rubber. Flame retardancy is usually the result of specific fillers, components that are added to the rubber for improving the flame retardancy. The world's most widely used flame retardant, which is also used in polymers such as rubber, is Alumina Trihydrate (ATH). As described in "Polymer Degradation and Stability" 126 (2016) 196-203 by S.Hu et al., ATH undergoes three stages of thermal degradation: a first stage at 227-260 °C and second stage of 277-331°C, which are both attributed to the elimination of water and then 471-561 °C resulting in elimination of water to generate Al2O3. The elimination of water is an endothermic process, that takes place in the inner part. The energy that is taken up by the inner part is thus used straight away when the temperature rises just over 200 °C. Advantageously, this abundance of energy occurs at a temperature that is below the melting point of aluminium at 660 °C. Again, without wishing to be bound by theory, it is thought that these type of endothermic processes provide a "heat sink" effect which would explain the observation that heat is sucked up by the inner part. That heat is then not available for increasing the temperature up to the melting temperature of the aluminium.

In an embodiment, the endothermic rubber is a ceramizable rubber. In Materials Science and Engineering 423 (2018) by J Q Song et al., is described how a ceramizable (or ceramifiable) silicone rubber foam is made. It has been proven possible to therewith obtain a silicon foam rubber that can form a ceramic structure to prevent fire and heat transmission under exposure to a high temperature. The pyrolysis of silicone rubber is reported to occur between 400 °C and 600°C, again under the melting temperature of aluminium. The end result is a compact ceramic skeleton structure that has some compressive strength, and a very low thermal conductivity.

Preferably, the outer part is made of expanded vermiculite grains held together by a binding agent, such as water glass. Typically the shape of the outer part is the result of a pressing process using a mould.

Ceramization agents may also be added, as well as fire retardant fillers. Appropriate ceramization agents are, for example, substances containing phosphor, such as phosphates, phosphinates, red phosphor, phosphoric acid derivatives, as well as structures containing silicon, such as silicates, silanes and siloxanes or borate glass. Fire retardant fillers are well-known.

Even more preferably, the outer part is provided with a coating. Such a coating can be a form of a reinforcement of the stability of the pressed and moulded expanded vermiculate or an equivalent thereof, as proposed in WO2018/189303. The coating, where present, protects the expanded vermiculite or the equivalent thereof. Further, the outer part as made of expanded vermiculite grains that are held by a binder agent, undergoes handling of the outer part after production of the outer part. Such handling includes packaging the outer part, replacing the outer part, transporting, and assembling the cover for use. Without a coating it is possible that grains will become loose and cause a rough surface of the outer part. Over time such a roughened outer part may further crumble apart despite the various binders used to hold the expanded vermiculite grains together. The coating solves the problem of how to provide long-term stability of the pressed expanded vermiculite.

In an embodiment, the coating is present on all sides of the outer side of the outer part of the cover, so that the expanded vermiculite is encapsulated in a closed volume that is defined by the coating.

In an embodiment, the coating is of a vapour impermeable material, and preferably a water-impermeable material. This has the advantage that the outer part is at least to an extent protected against ingress of water vapour so that the outer part can be used in an outdoor environment. That is, there is little to no chance that water reaches the expanded vermiculite or the equivalent thereof and as a result the outer part is prevented from experiencing a significant reduction of its thermal and mechanical properties.

In an embodiment, the outer part is provided with a coating which comprises inorganic particles. This improves the mechanical properties of the outer part as the initiation of cracks and the growth of cracks are suppressed.

In an embodiment, the coating is at least one of a heat insulating type of material, a heat-resistant type of material and a fire-retardant type of material. This further ensures that the outer part functions well in its role of providing thermal protection, so that the inner part is shielded off from a high temperature outside the container device. In an embodiment, the coating comprises inorganic particles.

Such a coating may be as described in EP 0281226 which discloses a water-based endothermic fire protective material comprising inorganic endothermic filler and a thermoplastic binder. The material can vary in viscosity from a putty that is moldable into place to a thin paste that can be sprayed to form a flexible and stable fire stop coating. The material can be applied so that no shrinkage occurs, retaining strength and adhesion qualities before and after exposure to fire, whilst also retaining superior resistance to impact, erosion and cooling effects of a hose stream used to combat fire.

In an embodiment, the assembly comprises an adhesive between the outer part and the inner part. When this is already the case prior to placement of the cover onto the container-like device, this assists in a fast installation of the assembly around the container-like device. The inner part, particularly when implemented as a silicon rubber having a closed cells structure, a foam structure may be produced as a sheet having a foam structure. This solves the problem of how to produce efficiently a cover that can protect a container like device. The sheet of endothermic rubber, preferably of a fire-resistant silicone foam, can be used as an inner lining of the cover.

When the cover is in the shape of a sleeve and should have an arched shape because of an arched outer form of the container-like device, then the arched shape can be imposed on this inner part by glueing the inner part to the concave side of an arched shaped outer part.

In an embodiment, the adhesive and the coating are the same. This allows for one production step in which both the outer part is coated and the inner part is connected to the outer part.

In an embodiment, the coating is at least one of a heat insulating type of material, a heat resistant type of material and a fire-retardant type of material. This further ensures that the outer part functions well in its role of providing thermal protection, so that the inner part is shielded off from a high temperature outside the container device. Reference is again made to EP0281226.

This reduces the probability that external heat can penetrate the core of the outer part. However, it also reduces the probability that after exposure of the outer part to external heat followed by heating up of the outer part, heat exchanges take place between the outer part and the inner part.

In an embodiment, the coating has a porous structure or forms pores at elevated temperatures. As for instance also described in US 2014/0112861 such a structure is thought to suppress thermal conductivity.

Without wishing to be bound by any theory, in a material having a porous structure, the thermal conductivity is to an extent determined by conduction of heat by gas. The pores provide many transitions from a pore, i.e. a small cavity (in which heat can be conducted by gas) to a material through which no conduction by gas can occur. A heated gas molecule can collide with the surface of the material, and as such pass on some of the thermal energy. However, such a collision will largely be elastic, so that the back-bouncing gas molecule will not have passed on much of its thermal energy to the material. As a consequence of this phenomenon, the thermal energy is effectively kept in the gas. The heat is thus not efficiently transported through the entire inner part. This may explain, at least to an extent, the low thermal conductivity of the coating when this is made of a porous material.

It is believed that also thermal conductivity by means of radiation (more detailed below) is suppressed in a material having pores. The smaller the pores, the smaller the thermal conductivity by radiation, is presently believed. This is also a view disclosed in US2014/0112861. A large number of fine pores is considered to allow for a greater infrared dispersion effect. Reducing radiation driven heat transfer has a significant effect on thermal conductivity, especially at a high temperature.

In an embodiment, the pores comprise pores having a diameter of less than 700 nanometres, preferably of less than 70 nanometres and even more preferably of less than 20 nanometres.

Again, without wishing to be bound by any theory, it is believed that such small pores contribute very significantly to a drop in thermal conductivity of the coating, when the ambient temperature rises, for instance, due to a nearby fire. As explained above many small pores would mean many transitions between a cavity and a material. The heat will predominantly remain within the gas as the transitions do not provide smooth transfers of heat from the gas to the material and vice versa. The transport of the thermal energy will be frustrated.

Preferably the pores comprise pores having a diameter of less than 70 nanometres. Where a part of the mechanism for transport of thermal energy is based on conduction of heat by gas, the transport mechanism can also be described as inelastic collisions of a gas molecule having a lot of thermal energy with a gas molecule having less thermal energy. It is thus the number of these collisions that determines to an extent the thermal conductivity of heat through a gas. A parameter related to the number of collisions is the so-called mean free path of a gas molecule. This is defined as the average distance travelled by a moving gas molecule between successive collisions. The length of this mean-free path is for a gas molecule with little to no dipole moment often considered to increase with the temperature of the gas. If the mean-free path of the gas is longer than the diameter of the cavity in which the heated gas molecule is present, then the gas molecule is more likely to first hit the surface of the material that forms the boundary of the cavity, than with another gas molecule. As explained above, the gas molecule may on colliding with a material pass on some of its thermal energy, but the majority will remain with the gas molecule. For many gas molecules, particularly air molecules (oxygen molecules and nitrogen molecules) the mean-free path at elevated temperatures is higher than 70 nanometres. Collisions between gas molecules are then thus rare. A heated gas molecule has very little chance to pass on energy to another gas molecule. Conduction of heat through the gas phase is then considered to become even further frustrated.

Accordingly, it is believed that heat cannot be swiftly transported through a material comprising many pores having a diameter of less than 70 nanometres, if the predominant mechanism for transport of heat is based on conduction of heat by gas.

In an embodiment the coating comprises a porous structure as a result of clustering of particles, wherein the particles have a size within a range of 2 to 100 nanometres, preferably 5 to 50 nanometres. Such a porous structure will inherently have the effects on the thermal conductivity as far as run over the gas.

However, heat can also be transported through materials. The presence of clustering of nanoparticles, introduces "bottlenecks" formed where the particles join. It is believed that such "necking" between nanometer-sized particles introduces a problem for the heat to be passed on through the materials, based for inorganic materials predominantly on, effectively, phonon-transport. Such a resistance contributes to a further drop in thermal conductivity of that material itself, i.e. regardless of the low thermal conductivity of gas in pores that may be present in such a material.

In an embodiment, the coating has a thickness in a range of 0.5 to 5 mm, preferably in a range of 1 to 3 mm. This has turned out to strike an optimal balance between applicability, enhancing strength against little enhancement of dimensions of the outer part, and good thermal isolation.

In an embodiment, the expanded vermiculite is dried-out expanded vermiculite. The temperature of the outer part may on exposure to a hot and dry environment reach more than the boiling point of water, and possibly also of compounds which have higher boiling temperatures. Any remaining water in the vermiculite could result in an internal pressure which is much higher than atmospheric pressure. When the outer part is encapsulated by a coating, the coating could be caused to tear or crack, or otherwise be made ineffective as a result of this high internal pressure. A vermiculate that is substantially made free of such relatively low-boiling point substances, reduces a risk on initiating damage to the coating by a high internal pressure.

In an embodiment, the expanded vermiculite is dried-out expanded vermiculite, for instance as a result of drying out in a hot oven for many hours. Alternatively, or additionally, the expanded vermiculite is dried-out expanded vermiculite as a result of a vacuum drying process or a process which can be carried out using an autoclave,

Provided as an embodiment of a second aspect of this disclosure is a method for making an assembly of parts for at least temporarily protecting a container-like device which is for instance at least predominantly made of aluminium against exposure to a temperature higher than the melting point of the aluminium. The method comprises:
providing an inner part which comprises predominantly an endothermic rubber, wherein the inner part is configured for at least partly embracing a container-like device,
providing an outer part which comprises a protective shell which is shaped to overlay the at least one inner part, and wherein the outer part is made of at least predominantly expanded vermiculite or an equivalent thereof and is optionally provided with a coating.

In this context, the wording "made of" is considered to embrace "predominantly comprises"

Preferably, the inner part is made of endothermic rubber. Endothermic rubber is a material which is engineered to undergo at least one endothermic reaction upon exposure to heat. An endothermic reaction requires heat input, and when the temperature is such that the reaction could from a thermodynamic perspective take place the endothermic rubber absorbs heat for further facilitating the endothermic reaction. As such, an endothermic rubber removes heat out of its surrounding. The inner part being predominantly made of an endothermic rubber can therefore act as a heat sink.

Preferably, the inner part is in its entirety an endothermic rubber.

Advantageously, the inner part of endothermic rubber can embrace a part of, and preferably fully surround, an aluminium container-like device. When it applies that the container-like device of aluminium is exposed to a high temperature, then that heat is sucked up by the endothermic rubber as soon as it reaches a temperature at which the rubber material undergoes an endothermic reaction. This embodiment of this aspect of the disclosure aims to solve the problem of how to maintain in the presence of a nearby source of much heat, such as a fire, a high capacity for taking up heat from the container-like device.

As the endothermic rubber is protected by the outer part of the cover against heat that is available at the external side of the cover, much of the capacity of the inner part for taking up heat, if not all the inner part's capacity for taking up heat, is available for taking up heat from the container-like device that is embraced by the cover. This embodiment of this aspect of the disclosure aims to solve the problem of how to maintain in the presence of a nearby source of much heat, such as a fire, a high capacity for taking up heat from the container-like device.

In an embodiment, a method according to the disclosure comprises:
applying the inner part so that it at least partly embraces a container-like device, and/or applying the inner part against a part of the outer part, so that the outer part overlays the inner part.

This embodiment is particularly advantageous when the method for making the assembly allows for obtaining in the assembled condition of the assembly a sleeve for embracing a circumference of a pipe-shaped container-like device. The method is especially useful when the container-like device is made of aluminium for captivating therein a Gas Insulated Subsystem or a GIB.

During a catastrophe such as a nearby fire, the aluminium pipe, having a specific heat of about 0.0009 KJ/Kg.K, is easily heated up. Aluminium, having a thermal conductivity of 237 W/ m.K rapidly transfers the heat along the axial direction of the pipe following a temperature gradient. Without wishing to be bound by a theory, it is thought that due to the presence of the endothermic inner part of the sleeve that surrounds the aluminium pipe over a length of the pipe up to the pipe-penetration through the wall, the heat raises the temperature of the inner part of the cover and at an elevated temperature triggers the material to undergo an endothermic reaction. The heat is then sucked from the aluminium into the inner part and as such diverted from being transferred via the aluminium towards the pipe penetration. This protects the pipe-penetration and the sealing used therein, and results in a relatively long period of time during which the pipe penetration can withstand exposure to a nearby fire.

To ensure that the inner part is fully available for its function of extracting heat out of the aluminium, the outer part, which is the shell that is made of expanded vermiculite or an equivalent thereof, blocks off a transfer of heat from the surrounding radially inwards to the inner part. Hence, the inner part can be optimally exclusively utilized for its role as heat sink for heat that initially travels axially along through the wall of the aluminium pipe.

Preferably, the outer part is made of expanded vermiculite, apart from the presence of a coating which is provided at the outer surface of the outer part.

Expanded vermiculite is generally cited to have a thermal conductivity in a range of 0.04-014 W/m.K. Hence, the outer part comprising predominantly expanded vermiculite, and preferably made of expanded vermiculite grains which are held together by a binder agent, has a low thermal conductivity. The specific heat is generally cited to be 0.92 kJ/Kg/K. The bulk density is generally cited to be 80-120 Kg/m3. Accordingly, the outer part is difficult to heat up and is an extremely poor conductor of heat, and is, in other words, a very good heat insulator. Hence, no matter from which side heat is available, the outer part is very reluctant to take it up and is very unwilling to allow heat to be transferred. Consequently, a cover comprising an outer part that is predominantly made of expanded vermiculite, protects the container-like device against a high external temperature.

Preferably the outer part is thus provided with a coating. This is also advantageous as vermiculite as bonded by waterglass is a relatively brittle material. The coating protects the vermiculite against crack initiation and crack propagation, which may otherwise occur upon mechanical impact for instance when the outer part is dropped during installing.

A coating may thus also offer protection against mechanical impact, so that some resistance is offered against external forces. This may also apply to other dynamic or static forces that may be present before, during, or after exposure to a fire. Depending on the type of coating, further advantages may be offered, as will be discussed later on.

In an embodiment, a method according to the disclosure comprises:
applying the inner part so that it at least partly embraces a container-like device, and/or applying the inner part against a part of the outer part, so that the outer part overlays the inner part.

In a further embodiment, in a first step the inner part is applied so that the container-like device is at least partly embraced, and in a second step the outer part is applied against the inner part so that the outer part overlays the inner part, wherein the first step takes place before the second step takes place.

Advantageously, this allows for first accurately and/or securely placing the inner part so as to optimize the contact between the inner part and the container-like device. Then the outer part can be applied against the inner part, using means that are suitable for that purpose.

It applies to another embodiment that in a step of the method that the inner part is applied against the outer part so that the outer part overlays the inner part before the inner part is applied so that it at least partly embraces a container-like device.

Advantageously, this allows for off-site preparing the cover so that the inner part and the outer part are both parts of the cover and for faster installing of the cover on-site. This is suitable for situations where the dimensions of the container-like device are reliably known at the time of putting the assembly in an assembled condition as a single part. This may also addresses a problem that is often found in the field of thermal shielding systems which consist of multiple components. Particularly, when after installation of the systems inner parts no longer can be seen, there is the possibility that an inferior inner part is used that does not have, or tends to only insufficiently have, the endothermic properties. By providing the outer part and the inner part as bonded together, and preferably in dimensions that allow for matching the outer surface of the container-like device, use of a less suitable inferior inner part is no longer a viable option. In short, it is more likely that a product of a cover having the inner part and the outer part bonded to each other is in accordance with the required safety standards and delivers as expected.

In an embodiment, the method comprises bonding the inner part and the outer part to each other. This facilitates an easy application, in one step, for applying the assembly around the container-like device. This even better addresses the above problem of the possible use of inferior and unsuitable inner parts, as the inner part comes effectively as an integral part of the outer part. The costs for removing the tested and approved inner part may be more costly than the costs that can be saved by using an untested and non-certified inner part.

In an embodiment, the inner and/or the outer part are provided as segmental parts which can be assembled into one cover.

This is particularly advantageous when existing and fixed container-like devices need to be covered by the assembly.

In an embodiment, the inner and/or the outer part are provided as longitudinal parts which can be assembled into a longer cover.

In an embodiment, the method comprises providing the outer part as one single outer part which is a sleeve or as at least two outer parts which together can form a sleeve, wherein the single outer part provides a circumference of the sleeve, and wherein each of the at least two outer parts provides at most a part of a circumference of the sleeve.

When the container-like device is a pipe-shaped device, it is possible to make tailor-made parts on the basis of the known diameter of the pipe-shaped device, the known dimensions of the inner part and, if used, the known thickness of the coating.

In an embodiment, the rubber has a foam structure. Silicone foam is known to have a thermal conductivity of about 0.1 W/m.K and it takes 0.7 KJ to let the temperature of one Kg of silicone foam to increase by one degree (c = 0.7 KJ/Kg.K). Clearly, once silicone rubber foam starts taking up heat, it does not increase its temperature that rapidly even though it takes up a lot of heat. It will not rapidly transfer the heat throughout the foam structure either.

In an embodiment, the rubber comprises at least predominantly closed cells containing a gas.

This allows for a foamed structure which has a thermal conductivity which is typical lower than that of the solid unfoamed rubber.

In an embodiment, the gas is at least predominantly nitrogen gas, and preferably is nitrogen gas. This reduces, or even excludes the presence of oxygen in the cells, so that the foam tends to be even more difficult to burn.

In an embodiment, the endothermic rubber is a silicone-based rubber, preferably a flame retardant silicon based rubber.

Such rubbers are known and widely available.

In an embodiment, the endothermic rubber is a ceramizable rubber. In Materials Science and Engineering 423 (2018) by J Q Song et al., is described how a ceramizable (or ceramifiable) silicone rubber foam is made. It has been proven possible to therewith obtain a silicon foam rubber that can form a ceramic structure to prevent fire and heat transmission under exposure to a high temperature. The pyrolysis of silicone rubber is reported to occur between 400 °C and 600°C, again under the melting temperature of aluminium. The end result is a compact ceramic skeleton structure that has some compressive strength, and a very low thermal conductivity.

Preferably, the outer part is made of expanded vermiculite grains held together by a binding agent, such as water glass. Typically the shape of the outer part is the result of a pressing process using a mould.

Ceramization agents may also be added incorporated. Appropriate ceramization agents are, for example, substances containing phosphor, such as phosphates, phosphinates, red phosphor, phosphoric acid derivatives, as well as structures containing silicon, such as silicates, silanes and siloxanes or borate glass.

In an embodiment, an adhesive is applied between the outer part and the inner part for bonding these to each other. When this is already the case prior to placement of the cover onto the container-like device, this assists in a fast installation of the assembly around the container-like device. The inner part, particularly when implemented as a silicon rubber having a closed cells structure, a foam structure may be produced as a sheet. This solves the problem of how to produce efficiently an assembly that can protect a container like device. The sheet of endothermic rubber, preferably of a fire-resistant silicone foam, can be used as an inner lining of the outer part and bonded to the outer part by the adhesive. Then an arched shape can be imposed on this inner part by glueing the inner part to an arched shaped outer part.

In an embodiment, the outer part is provided with a coating which comprises inorganic particles. Such a coating may be as described in EP 0281226 which discloses a water-based endothermic fire protective material comprising inorganic endothermic filler. The material can vary in viscosity from a putty that is moldable into place to a thin paste that can be sprayed to form a flexible and stable fire stop coating. The material can be applied so that no shrinkage occurs, retaining strength and adhesion qualities before and after exposure to fire, whilst also retaining superior resistance to impact, erosion and cooling effects of a hose stream used to combat fire.

In an embodiment, the adhesive and the coating are the same. This allows for one production step in which both the outer part is coated and the inner part is connected to the outer part.

In an embodiment, the coating is of a water-resistant material, and preferably a water-impermeable material. Such a coating is described in detail in US 10,487,218 and should for the purpose of making in line with the present disclosure be a coating without expanded graphite. The coating is preferably a water-based coating. The coating is optionally first applied as a thin layer which is dried before a second thicker layer is applied.

Without wishing to be bound by any theory, vermiculite - of which the first part is made - is considered to be a clay mineral having a layered structure of which the layers are slightly negatively charged. The interlayer space is occupied by hydrated cations (Mg2+, Fe2+, Al3+), which is possible given the relatively low negative charge of the layers.

On heating the vermiculite these cations leave the interlayer space together with the water which is set free as water vapor. This causes the layers to expand considerably.

However, the process is reversible. That is, when water containing such cations hits the expanded vermiculite, the interlayer space is again reduced. Vermiculite can thus shrink well and swell well depending on the moist conditions that apply.

As the coating protects against the uptake of water, a change in the availability of carriers of cations is likely to occur. This thus forms a first contribution to maintaining the stability of the dimensions of the outer part. Having the inner volume free from substances which otherwise, when present, would become freely available in a gaseous or vaporous state upon heating the amount of expanded vermiculate grains, means that any remaining number of such carriers is likely to be so low that the mobility of the cations is inhibited. Thus, the shrinking and the swelling of the vermiculite is largely incapacitated. This results in a contribution to maintaining the stability of the dimensions of the outer part. This is further described in NL2039708.

In an embodiment, the coating is at least one of a heat insulating type of material, a heat resistant type of material and a fire-retardant type of material. Such a material is for instance described in US 2014/0112861.

In an embodiment, the coating is applied on all sides of the outer part. The effects of the coating apply thus to all sides of the outer part.

In an embodiment, the coating has a thickness in a range of 0.5 to 6 mm, preferably in a range of 1 to 3 mm, which provides a good balance between an efficient application of the coating and its required performance.

In an embodiment, the expanded vermiculite is dried out expanded vermiculite. Drying out, preferably using heat, a vacuum or use of an autoclave, leads to removal of substances which become freely available in a gaseous or vaporous state upon heating the expanded vermiculate grains also contributes to the stability in dimensions of the object from the perspective that the coating is not from within the volume put under pressure. By removing those substances, it is unlikely that substances are within a volume delimited by the coating available for becoming upon heating a high-pressurized gas within the volume encapsulated by the coating. The adherence and coherence of the coating is thus not challenged from within and it is thus unlikely that paths between an external side of the coating and an internal side of the coating for travels of vapors will be formed through the coating. This contributes to the functioning of the coating, and thus also to the stability of the dimensions of the outer part.

Preferably, the expanded vermiculite is dried out expanded vermiculite as a result of removal of solvent of binder and an additional drying out procedure for removing any water from the expanded vermiculite.

As indicated above, preferably, the method comprises providing an assembly which is suitable for at least temporarily protecting a container-like device that is a pipe-shaped device.

The method may further comprise providing an assembly which is suitable for at least temporarily protecting a pipe made of aluminium or an alloy thereof for captivating therein a Gas Insulated Subsystem or a Gas Insulated Busbar.

The method may thus also comprise applying the assembly to a Gas Insulated Subsystem, or a Gas Insulated Busbar.

The outer part preferably has a thickness between 10 and 40 mm, and preferably between 20 and 30 mm and most preferably is of about 25 mm. The inner part also preferably has a thickness between 10 and 40 mm, and preferably between 10 and 30 mm and most preferably is of about 25 mm.

In an embodiment, the method also comprises completely enclosing the container-like device with at least one outer part which outer part comprises a protective shell which is made of expanded vermiculite and optionally provided with a coating and which is optionally free from a lining of endothermic rubber.

Some of the advantages for embodiments of an assembly equally apply for corresponding embodiments of a method that results in such a respective assembly.

The disclosure is further without intending to be limiting further explained with reference to a drawing in which:

### Brief description of the drawings

Figure 1 shows in cross-section a first example of an assembly according to the disclosure;
Figure 2 shows partly in cross-section a second example of an assembly according to the disclosure;
Figure 3 shows in cross-section a third example of an assembly according to the disclosure;
Figure 4 shows in cross-section a fourth example of an assembly according to the disclosure;
Figure 5 shows examples of an outer part of an assembly according to the disclosure;
Figure 6 shows an example of an outer part of an assembly according to the disclosure;
Figure 7 shows schematically an example of a step according to a method of the disclosure;
Figure 8 shows schematically an example of a step according to a method of the disclosure;
Figure 9 shows schematically an example of a step according to a method of the disclosure;
Figure 10 shows schematically an example of a step according to a method of the disclosure;
Figure 11 shows schematically an example of a step according to a method of the disclosure;
Figure 12 shows in a perspective view a part of a cover as partly embracing a pipe;
Figure 13 shows examples of parts of an assembly according to the disclosure;

### Detailed Description

In the description of the figures, like elements are referred to by like references. In this disclosure, reference is often made to an aluminium container-like device, or a device that is made of aluminium. Such a device can also be a pipe, which is intended, as is usually the purpose of a pipe, in practice to be connected to another pipe or other container-like device. In any case, a container-like device made be pipe-shaped. In the figures, often only a part of a pipe is shown, as it is for the purpose of explaining the disclosure not relevant whereto the pipe is connected. The term aluminium embraces in this context also an aluminium alloy, of which many types are known.

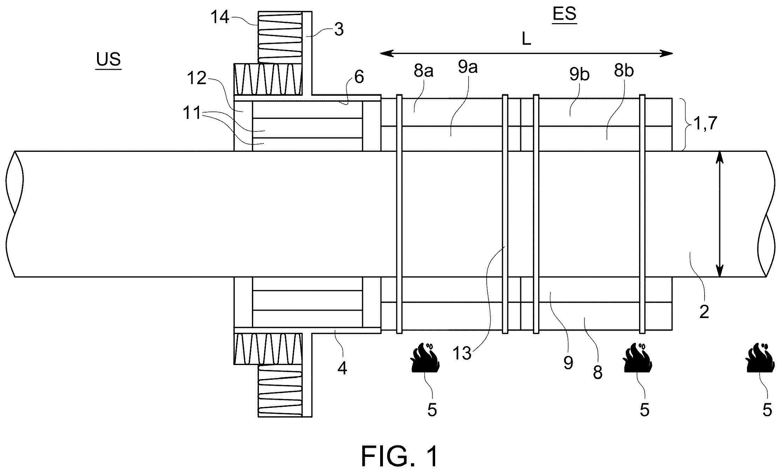

Figure 1 shows in cross-section a first example of an assembly of parts 1 for at least temporarily protecting an aluminium container-like device, in this case an aluminium pipe 2. The pipe 2 extends through an opening in a bulkhead, typically of steel, and for instance A60 classified. A conduit sleeve 4 also of steel is welded into the opening and thus in a sealed connection with the bulkhead. The constellation shown is typically used for testing the pipe penetration when according to a relevant fire test protocol (FTP) a fire 5 takes place at what is referred to as the exposed side ES. In the conduit sleeve 4 the annular space between an inner wall 6 of the conduit sleeve 4 is typically sealed off with a fire-resistant sealing system, for instance a system of fire resistant rubber sleeves 11 which are oriented parallel to the pipe 2 and sandwiched between a sealant 12. Such a system is for instance as described in WO2008/104237 A1.

The temperature at the ES side may be about 1000 °C. The assembly 1 aims to delay the melting of the aluminium pipe 2 close to the pipe penetration, so that no flaming for at least the course of that hour at the other side of the bulkhead, which is often referred to as the unexposed side US. The unexposed side of the bulkhead 3 and the conduit sleeve 4 is preferably provided with insulation material 14, as is typically prescribed in the relevant FTP.

The assembly 1 forms in the assembled condition a cover 7 which embraces the pipe, in this example in the circumferential direction. The assembly 1 comprises at least one outer part 8 of the cover 7 and at least one inner part 9 of the cover 7. The inner part 9 comprises at least predominantly an endothermic rubber which is configured for embracing the pipe 2. Such a configuration may simply be given by the fact that the endothermic rubber is provided in the form of a sheet which is in circumferential direction wrappable around the pipe. Such a configuration may also be given by the fact that the endothermic rubber is provided in the form of a sleeve which is for instance slitted in a length-wise direction for putting around the pipe 2. The outer part 8 may in use, i.e. at least in the assembled condition, comprise a protective shell 10 which is shaped to overlay one or more of the inner parts 9. The outer part 8 at least predominantly comprises expanded vermiculite or an equivalent thereof and is optionally
provided with a coating. The outer part 8 is configured for providing a stably shaped cavity into which at least in the assembled condition the inner part 9 is at least partly held, so that the inner part 9 is in an assembled condition shielded off from the high external temperature. Preferably, the inner part 9 and the outer part 8 are bonded together. The assembly, may in assembled condition, comprise an adhesive between the inner part 9 and the outer part 8. The adhesive may be the same as the coating which is optionally provided at the surface, or all the surfaces of the outer part 8. The inner part 8 and the outer part 9 may alternatively or additionally in the assembled form of the assembly be held together and around the pipe 2 by means of stainless stell jubilee straps 13.

As shown, the assembly 1 embraces the pipe 2 over a length L and both the outer part 8 and the inner part 9 comprise longitudinal parts 8a, 8b, 9a, 9b. It is possible that only one of the outer part 8 and the inner part 9 is formed by longitudinal parts which are lined up in length direction. Depending on the diameter of the pipe, the thickness of the pipe wall, as well as the thicknesses of the inner part and the outer part, the length over which the assembly embraces the pipe can be selected to achieve the required fire rating.

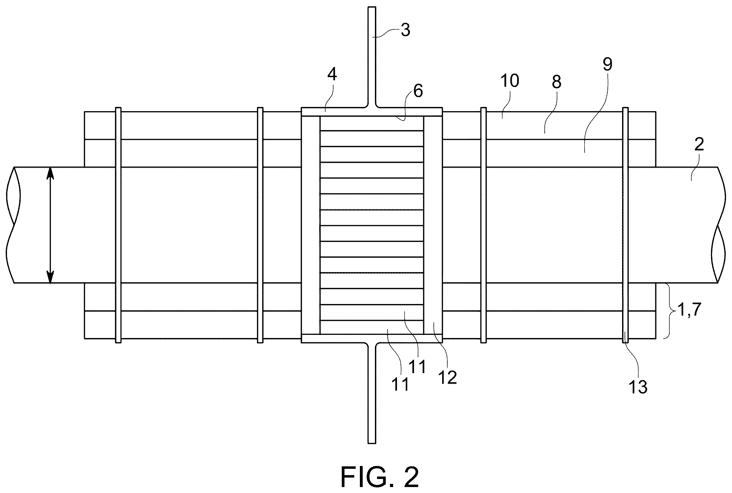

Figure 2 shows partly in cross-section a second example of an assembly according to the disclosure. The sealing system formed by the sleeves 11 and the sealant 12 is not shown in cross section but rather in a side view whilst the conduit sleeve 4 is shown in cross-section. In this example, the assembly is shown in use at both sides of bulkhead 3 This is suitable for a situation in which a fire could start at either side of the bulkhead 3 and wherein the pipe penetration thus needs to be protected at each side, by protecting the aluminium pipe 2 against melting. Both sides can be protected using an assembly according to the disclosure so that the fire integrity can be maintained irrespective of the side where the fire takes place.

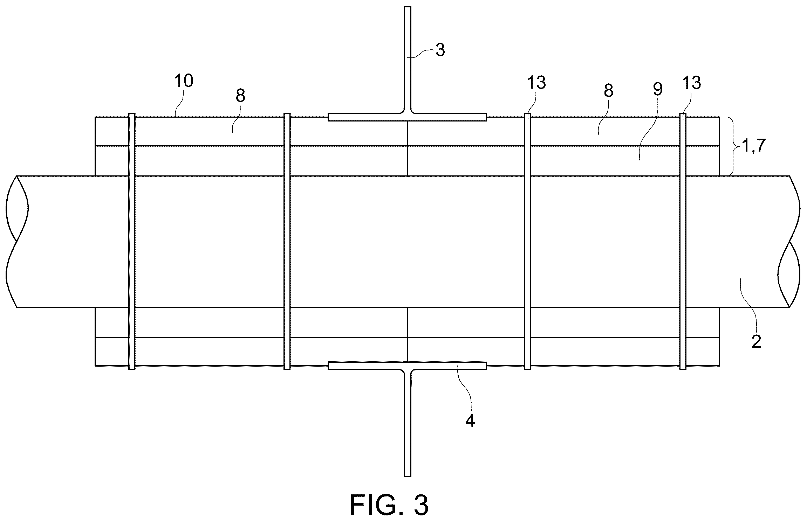

Figure 3 shows an example of an assembly according to the disclosure in a similar use as shown in figure 2 with the difference that the assembly extends fully through the conduit sleeve 4 and that no use is made of the sealing system shown in figure 1 and 2. Possibly, care needs to be taken that ends of the outer parts 8 which are to be inserted in the conduit sleeve are accurately dimensioned. Possibly, a sealant or extra coating needs to be applied against the ends of the conduit to enhance the sealing integrity at those positions.

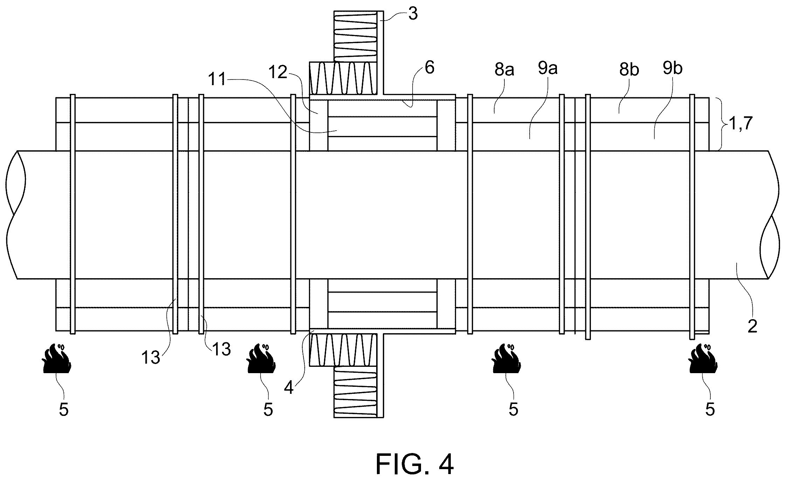

Figure 4 is in essence the same as figure 3 to which dimensions are added in mm by means of example.

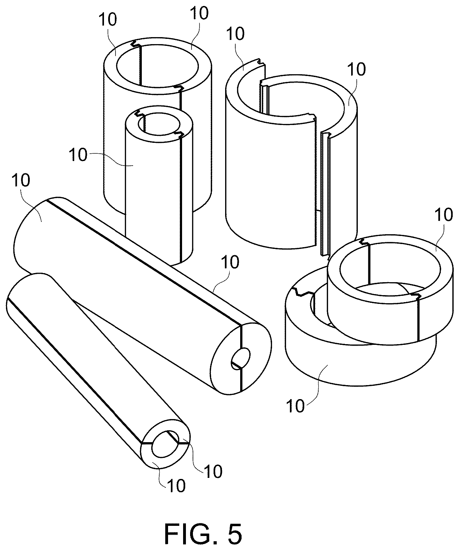

Figure 5 shows in perspective a number of protective shells 10. It is of course conceivable that such shells are each one single outer part forming in itself a sleeve-shaped shell (not shown). The examples shown each comprise two outer parts 8 which together form a sleeve-shaped shell 10. A single outer part 8 may provide a full circumference of a sleeve-shaped shell or only a part of a sleeve-shaped shell. That is, some outer parts 9 may provide at most a part of a circumference of a sleeve-shaped shell 10.

Although Figure 5 is here described to be showing the forms in which the outer parts 8 may be provided, it will be understood that this equally applies to the inner parts 9, which may thus also comprise segmental parts of a circumference of the cover 7.

The inner part, being an endothermic rubber, may be more easily be provided in the form of a sheet, which is helpful particularly when the aluminium container-like device is large. This may also be preferable for large diameter pipes. The rubber, being somewhat flexible anyway, may be provided as a sheet or in sleeve-shaped form. The endothermic rubber has a foam structure. Possibly, the endothermic rubber predominantly comprises closed cells containing a gas, which may be nitrogen, at least predominantly. The endothermic rubber is preferably a silicone-based rubber, preferably a flame- or fire-retardant silicone-based rubber. The endothermic rubber is preferably a ceramizable rubber.

Turning now to the optional coating. Preferably, this coating comprises inorganic particles, which tend to cope well with extreme heat. Preferably, the coating is water vapour impermeable. It is also preferable that the coating is at least one of a heat insulating type of material, a heat-resistant type of material and a fire-retardant type of material. Ideally the coating is present on all sides of the outer part 8.

Suitably, the coating may have a thickness in a range of 0.5 to 6 mm, preferably in a range of 1 to 3 mm.

The outer part predominantly comprises expanded vermiculite, which preferably is dried-out expanded vermiculite. The expanded vermiculite is dried-out expanded vermiculite, preferably as a result of drying out in a hot oven and/or drying out in a vacuum drying process, or drying out using an autoclave. This is further described in NL2039708.

An embodiment of the assembly is suitable for at least temporarily protecting a container-like device that is a pipe-shaped device, which may further be suitable for at least partly captivating therein a Gas Insulated Subsystem, a Gas Insulated Busbar, or Gas Insulated Lines.

The outer part may have a thickness between 10 and 40 mm, and preferably between 20 and 30 mm and most preferably about 25 mm.

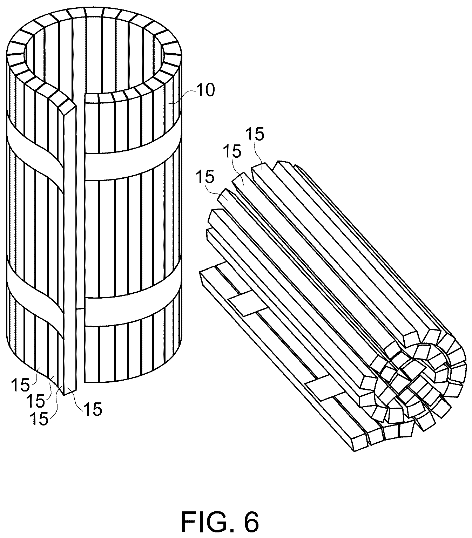

Figure 6 shows an embodiment of outer part which is suitable for wrapping around a large diameter pipe. This outer part 8 comprises a number of slats aligned parallel to each other in a unit and connected so that the outer part can form a sleeve and also so that the unit can also be efficiently and compared to the sleeve be space-efficiently rolled up, as shown in Figure 6.

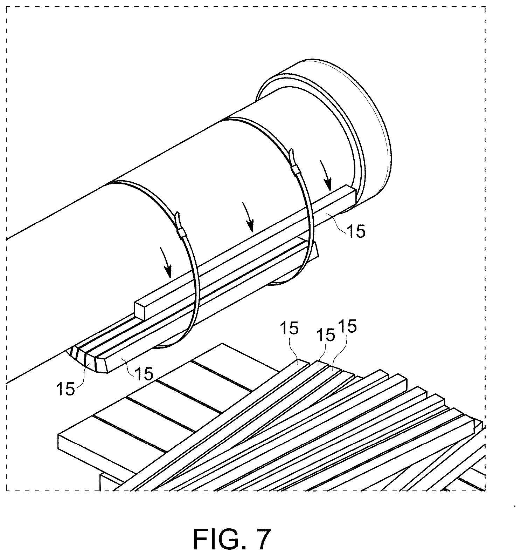

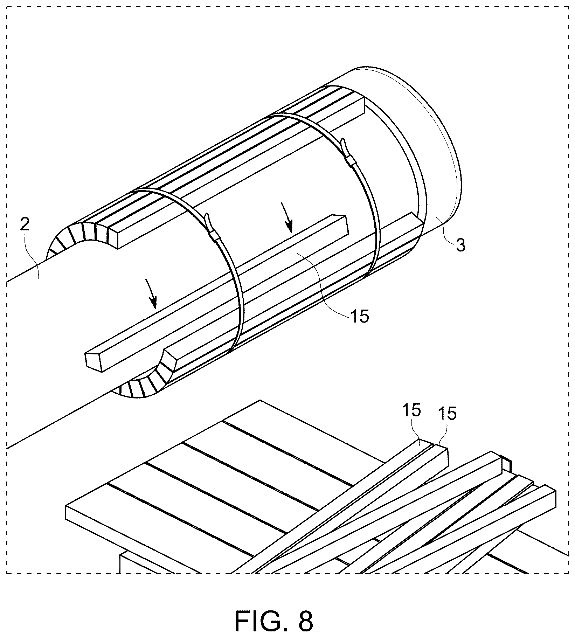

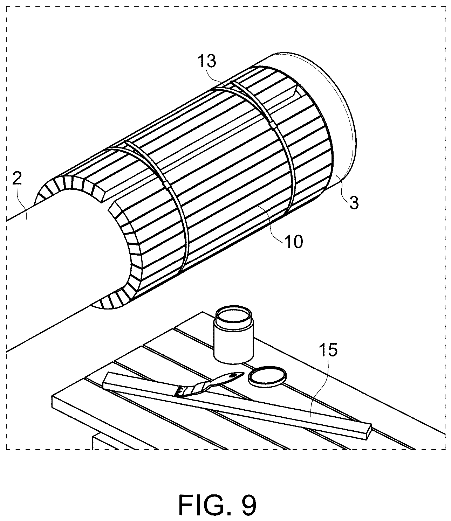

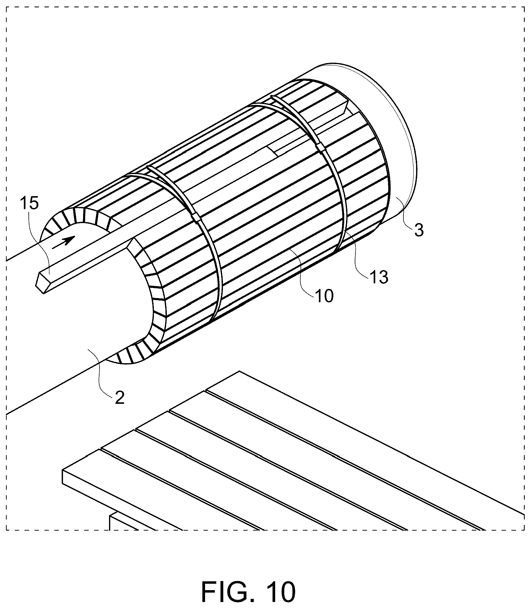

Turning now to a method for making an assembly of parts for at least temporarily protecting a container-like device which is predominantly made of aluminium, against exposure to a temperature higher than the melting point of the aluminium, reference is made to Figures 7-11. In general, the method method comprises:
- providing an inner part 9 which comprises predominantly an endothermic rubber, wherein the inner part 9 is configured for at least partly embracing a container-like device,
- providing an outer part 8 which comprises, or is transitionable into, a protective shell which is shaped to overlay the at least one inner part, and wherein the outer part is made of expanded vermiculite or an equivalent thereof and optionally provided with a coating.

As indicated earlier on, the inner part 9 may be a sleeve with or without a slit extending in the longitudinal direction. The inner part 9, may also be a wrappable sheet of endothermic rubber, or be relatively stiff but compliant to a shape that is imposed by a cavity that is made available by overlaying the outer part 8 onto the inner part 9.

The outer part 8 is typically relatively stiff, and can be provided as parts of a shell as shown in fig 5 or be provided as a wrappable unit as shown in fig. 6.

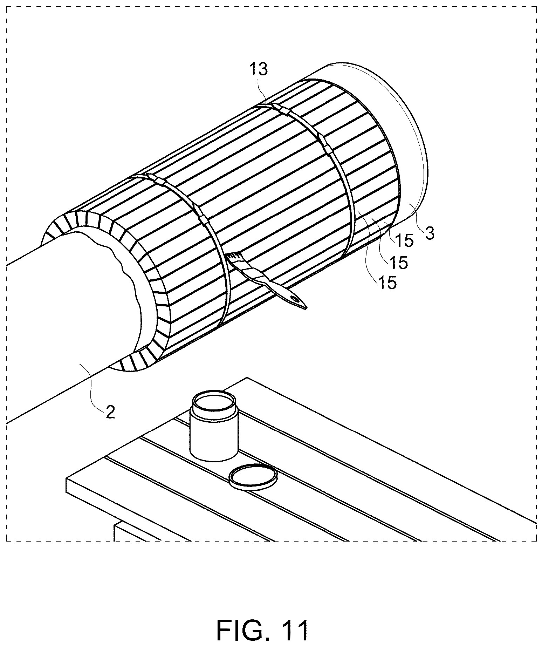

However, as shown in fig 7-11, it is also possible to provide the outer part 8 over the inner part 9, after the inner part has been onto the container like device, such as a pipe, and building up a full outer part 8 out of a large number of segmental parts 15. Ideally, first a jubilee clip 13 of stainless steel is put around the pipe-shaped container-like device 2 onto which the inner part 9 has already been provided in an embracing fashion. Then slats 15 as parts of the outer part 8 can slat 15 by slat 15 be placed onto the inner part 9 for building up the outer part 8 by placing the slats 15 parallel and next to each other, till the full circumference of the pipe 2 with the inner part 9 thereon is covered by an outer shell 10 formed by the slats 15. Optionally, the coating is applied to the outer part so that a smooth and continuous outer surface is provided onto the outer part 8, as is shown in fig. 11

The tightness of the jubilee clip 13 can be varied to first facilitate the "insertion" of the slats 15 and later to hold these slats 15 tightly in place against each other.

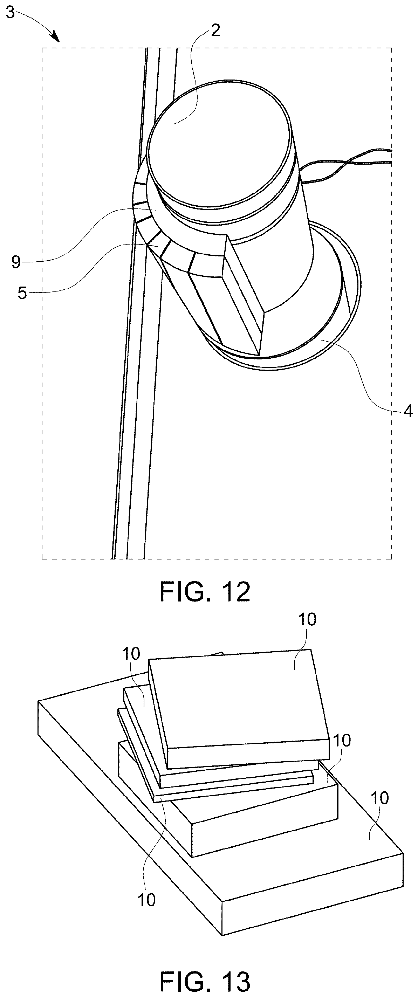

It is also possible to provide inner part 9 against the outer part 8 before the inner part 9 is positioned so as to embrace the container-like device 2. The inner and outer part may thus be bonded to each other according to an embodiment of the method, before the cover is in its entirely place to cover at least partly the container like device. Figure 12 shows how closely the inner part 9 and the outer part may be bonded to form in practice just one cover.

As can also be seen, the inner part 9 and the outer part 8 may have the same thickness. The inner part 9 may have a thickness between 10 and 40 mm, and preferably between 20 and 30 mm and is preferably of about 25 mm.

Figure 13 shows parts of an outer part 8 which are all block-shaped and which can be used for building up an outer part around more angularly shaped container-like devices.

The assembly comprises additionally at least one outer part for further completing the enclosing of the container-like device, which outer part comprises a protective shell which is made of expanded vermiculite or an equivalent thereof and which is optionally provided with a coating, and which is optionally free from an inner part that is of endothermic rubber. Such a part may be provide to protect the device against external heat and not provide a heat sink for heat that is within the device available or generated.

The assembly may be placed such as to protect a Gas Insulated Subsystem (GIS), a Gas Insulated Busbar (GIB) or an Gas Insulated Line (GIL) wherein the assembly is part of a multiple part sealing system that seals off a penetration in a divider of space through which a GIS, GIB or GIL extends. The assembly may thus be considered to also comprise a Gas Insulated Subsystem (GIS), a Gas Insulated Busbar (GIB) or an Gas Insulated Line (GIL).

The optional coating may have a porous structure or forms pores at elevated temperatures. As for instance also described in US 2014/0112861 such a structure is thought to suppress thermal conductivity.

Without wishing to be bound by any theory, in a material having a porous structure, the thermal conductivity is to an extent determined by conduction of heat by gas. The pores provide many transitions from a pore, i.e. a small cavity (in which heat can be conducted by gas) to a material through which no conduction by gas can occur. A heated gas molecule can collide with the surface of the material, and as such pass on some of the thermal energy. However, such a collision will largely be elastic, so that the back-bouncing gas molecule will not have passed on much of its thermal energy to the material. As a consequence of this phenomenon, the thermal energy is effectively kept in the gas. The heat is not efficiently transported through the entire protective layer. This may explain, at least to an extent, the low thermal conductivity of the protective layer. It is believed that also thermal conductivity by means of radiation (more detailed below) is suppressed in a material having pores. The smaller the pores, the smaller the thermal conductivity by radiation, is presently believed. This is also a view disclosed in US2014/0112861.

A large number of fine pores is considered to allow for a greater infrared dispersion effect. Reducing radiation driven heat transfer has a significant effect on thermal conductivity, especially at high temperature.

In an embodiment, wherein the pores comprise pores having a diameter of less than 700 nanometers, preferably of less than 70 nanometers and even more preferably of less than 20 nanometers. Again, without wishing to be bound by any theory, it is believed that such small pores contribute very significantly to a drop in thermal conductivity of the protective layer, when the ambient temperature rises, for instance, due to a nearby fire. As explained above many small pores would mean many transitions between a cavity and a material. The heat will predominantly remain within the gas as the transitions do not provide smooth transfers of heat from the gas to the material and vice versa. The transport of the thermal energy will be frustrated.

Preferably the pores comprise pores having a diameter of less than 70 nanometers. Where a part of the mechanism for transport of thermal energy is based on conduction of heat by gas, the transport mechanism can also be described as inelastic collisions of a gas molecule having a lot of thermal energy with a gas molecule having less thermal energy. It is thus the number of these collisions that determines to an extent the thermal conductivity of heat through a gas. A parameter related to the number of collisions is the so-called mean free path of a gas molecule. This is defined as the average distance travelled by a moving gas molecule between successive collisions. The length of this mean-free path is for a gas molecule with little to no dipole moment often considered to increase with the temperature of the gas. If the mean-free path of the gas is longer than the diameter of the cavity in which the heated gas molecule is present, then the gas molecule is more likely to first hit the surface of the material that forms the boundary of the cavity, than with another gas molecule. As explained above, the gas molecule may on colliding with a material pass on some of its thermal energy, but the majority will remain with the gas molecule. For many gas molecules, particularly air molecules (oxygen molecules and nitrogen molecules) the mean-free path at elevated temperatures is higher than 70 nanometers. Collisions between gas molecules are then thus rare. A heated gas molecule has very little chance to pass on energy to another gas molecule. Conduction of heat through the gas phase is then considered to become even further frustrated. Accordingly, it is believed that heat cannot be swiftly transported through a material comprising many pores having a diameter of less than 70 nanometers, if the predominant mechanism for transport of heat is based on gas conduction.

In an embodiment the protective layer comprises the porous structure comprises clusterings of particles, wherein the particles have a size within a range of 2 to 100 nanometers, preferably 5 to 50 nanometers. Such a clustering is likely to result in a porous structure, having inherently the effects on the thermal conductivity as described above.

So far consideration is mainly given to heat conduction by gas. However, heat can also be transported through materials. Such a clustering is likely to result in a porous structure.

Furthermore, the presence of clusterings of nanoparticles, introduces "bottlenecks" formed where the particles join. It is believed that such "necking" between nanometer-sized particles introduces a problem for the heat to be passed on through the materials, based for inorganic materials predominantly on, effectively, phonon-transport. Such a resistance contributes to a further drop in thermal conductivity of that material itself, i.e. regardless of the low thermal conductivity of gas in pores that may be present in such a material.

The disclosure is not limited to the examples shown. Many other embodiments are conceivable within the framework of the appended claims.

## Claims

1. An assembly (1) of parts for at least temporarily protecting an aluminium container-like device against reaching a melting temperature of the aluminium device, wherein in an assembled condition the assembly forms at least a cover (7) for at least partly embracing the container-like device, and wherein the assembly comprises at least one outer part (8) of the cover (7) and at least one inner part (9) of the cover (7), wherein the inner part (9) comprises at least predominantly an endothermic rubber which is configured for at least partly embracing the container-like device, wherein the endothermic rubber has a foam structure, wherein the outer part (8) comprises a protective shell which is shaped to overlay the at least one inner part (9), and wherein the outer part (8) at least predominantly comprises expanded vermiculite or an equivalent thereof and is optionally provided with a coating, wherein the outer part (8) is configured for providing a stably shaped cavity into which at least in the assembled (1) condition the inner part (9) is at least partly held, so that the inner part (9) is in an assembled condition shielded off from a high external temperature.

2. An assembly (1) according to claim 1, wherein the inner part (9) and the outer part (8) are bonded to each other.

3. An assembly (1) according to claim 1 or 2, wherein the inner and/or the outer part (8,9) comprise segmental parts (15) of a circumference of the cover (7).

4. An assembly (1) according to claim 1, 2, or 3, wherein the inner and/or the outer part (8,9) comprise longitudinal (8a, 8b, 9a,9b) parts of the cover (7).

5. An assembly (1) according to claim 1, 2, 3 or 4, wherein in the assembled condition one single outer part (8) forms a sleeve or at least two outer parts (8) together form a sleeve, wherein the single outer part (8) provides a circumference of the sleeve, and wherein each of the at least two outer parts (8) provide at most a part of a circumference of the sleeve.

6. An assembly (1) according to any one of claims 1-5, wherein the endothermic rubber comprises predominantly closed cells containing a gas.

7. An assembly (1) according to claim 6, wherein the gas is predominantly nitrogen gas.

8. An assembly (1) according to any one of claims 1-7, wherein the endothermic rubber is a silicone-based rubber, preferably a flame- or fire-retardant silicone-based rubber.

9. An assembly (1) according to any one of claims 1-8, wherein the endothermic rubber is a ceramizable rubber.

10. An assembly (1) according to any one of claims 1-9, wherein the assembly comprises an adhesive between the outer part and the inner part (9).

11. An assembly (1) according to any one of claims 1-10, wherein the outer part (8) is provided with a coating which comprises inorganic particles.

12. An assembly (1) according to claim 10 and 11, wherein the adhesive and the coating are the same.

13. An assembly (1) according to any one of claims 1-12, wherein the coating is water vapour impermeable.

14. An assembly (1) according to any one of claims 1-13, wherein the coating is at least one of a heat insulating type of material, a heat-resistant type of material and a fire-retardant type of material.

15. An assembly (1) according to anyone of the previous claims, wherein the coating is present on all sides of the outer part (8).

16. An assembly (1) according to any one of claims 1-15, wherein the expanded vermiculite is dried-out expanded vermiculite.

17. An assembly (1) according to anyone of the previous claims, wherein the assembly (1) is suitable for at least temporarily protecting a container-like device that is a pipe-shaped device.

18. An assembly (1) according to any one of the previous claims, wherein the assembly (1) is suitable for at least temporarily protecting a pipe made of aluminium or an alloy thereof for captivating therein a Gas Insulated Subsystem, or a Gas Insulated Busbar.

19. An assembly (1) according to any one of the previous claims, wherein the assembly (1) comprises additionally at least one outer part (8) for further completing the enclosing of the container-like device, which outer part (8) comprises a protective shell which is made of expanded vermiculite or an equivalent thereof and which is optionally provided with a coating, and which is optionally free from an inner part that is of endothermic rubber.

20. An assembly (1) according to any one of the previous claims, wherein the assembly further comprises to a Gas Insulated Subsystem (GIS), a Gas Insulated Busbar (GIB), or a Gas Insulated Line and/or wherein the assembly (1) is part of a sealing system that seals off a penetration in a divider of space through which a GIS, a GIB or a GIL, extends.
